# NEUE EUROPÄISCHE PATENTSCHRIFT

(11) **EP 1 116 724 B2**
(45) Veröffentlichungstag und Bekanntmachung des Hinweises auf die Entscheidung über den Einspruch: **10.09.2014**
(45) Hinweis auf die Patenterteilung: 30.08.2006
(21) Anmeldenummer: 00127772.2
(22) Anmeldetag: 19.12.2000
(51) Int. Cl.: C07F 15/00

(54) **Verfahren zur Herstellung von [IrCODCl]2**
Process for preparing (IrCODCl)2
Procédé pour la préparation de (IrCODCl)2

(30) Priorität: 10.01.2000 DE 10000710
(43) Veröffentlichungstag der Anmeldung: 18.07.2001
(73) Patentinhaber: Heraeus Precious Metals GmbH & Co. KG, 63450 Hanau (DE)
(72) Erfinder: Franz, Renate, 63571 Gelnhausen (DE); Kirchner, Sonja, 63628 Bad Soden-Salmünster (DE); Walter, Richard, Dr., 63755 Alzenau (DE)
(74) Vertreter: UEXKÜLL & STOLBERG

(56) Entgegenhaltungen:
- DONG C-E ET AL: "STUDIES ON THE SYNTHESIS OF NEW SULFONYLAMIDE LIGAND, CRYSTAL STRUCTURE AND ASYMMETRIC HYDROGEN TRANSFER REACTION OF ACETOPHENONE" CHEMICAL JOURNAL OF CHINESE UNIVERSITIES, XX, CN, Bd. 7, Nr. 21, 2000, Seiten 1070-1072, XP001084376 ISSN: 1000-9213
- POHL, MATTHIAS ET AL: "Polyoxoanion-Supported Catalyst Precursors. Synthesis and Characterization of the Iridium(I) and Rhodium(I) Precatalysts [(n-C4H9)4N]5Na3[(1,5- COD)M.P2W15Nb3O62] (M = Ir, Rh)" INORGANIC CHEMISTRY (1995), 34(6), 1413-29 , 1995, XP001094978 ISSN: 0020-1669
- WEHMAN-OOYEVAAR, INGRID C. M. ET AL: "Stereoselective isomerization in organoiridium(III) complexes induced by the presence of rigid C,N chelating ligands" INORGANIC CHEMISTRY (1993), 32(15), 3347-56 , 1993, XP002212684
- BAGHURST D R ET AL: "APPLICATION OF MICROWAVE DIELECTRIC LOSS HEATING EFFECTS FOR THE RAPID AND CONVENIENT SYNTHESIS OF ORGANOMETALLIC COMPOUNDS" JOURNAL OF ORGANOMETALLIC CHEMISTRY, ELSEVIER-SEQUOIA S.A. LAUSANNE, CH, Bd. 3, Nr. 368, 1989, Seiten C43-C45, XP001084446 ISSN: 0022-328X
- CRABTREE R H ET AL: "AN EFFICIENT SYNTHESIS OF [Ir(cod)CI]2 AND ITS REACTION WITH PMe2Ph TO GIVE FAC-[IrH(PMe2C6H4)(PMe2Ph)3]" SYNTHESIS AND REACTIVITY IN INORGANIC AND METALLORGANIC CHEMISTRY, MARCEL DEKKER INC. NEW YORK, US, Bd. 4, Nr. 12, 1982, Seiten 407-413, XP001084375 ISSN: 0094-5714
- BEZMAN, S. A. ET AL: "Metallacyclic complexes of iridium" INORGANIC CHEMISTRY (1980), 19(12), 3755-63 , XP002212685 ISSN: 0020-1669
- CRABTREE, ROBERT H. ET AL: "Some diolefin complexes of iridium(I) and a trans-influence series for th complexes [IrCl(cod)L]" J. ORGANOMET. CHEM. (1977), 135(3), 395-403 , 1977, XP001085248
- HERDE, J. L. ET AL: "Cyclooctene and 1,5-cyclooctadiene complexes of iridium(I)" INORGANIC SYNTHESES (1974), 15, 18-20 , 1974, XP001088229
- PANNETIER, GUY ET AL: "Complexes of iridium with 1,5-cyclooctadiene [1,5-COD]. II. Preparation of [(1,5-COD)IrCl]2, red variety" JOURNAL OF THE LESS-COMMON METALS (1970), 21(4), 437-8 , XP001087920
- WINKHAUS, GUENTER ET AL: "Iridium(I)-olefin complexes" CHEMISCHE BERICHTE (1966), 99(11), 3610-18 , XP001084324
- INORGANIC SYNTHESIS, Bd. 14, 1973, Seiten 92-95,
- R.T. MORRISON ET AL.: 'Lehrbuch der Organischen Chemie', Bd. 2, 1983, VERLAG CHEMIE, WEINHEIM Seiten 546 - 548
- 'Aldrich Katalog Feinchemikalien', 2000, SIGMA-ALDRICH CHEMIE GMBH, DEISENHOFEN Seite 995
- S.D. ROBINSON ET AL.: 'A Hydrido Diolefin Complex of Iridium (III)' TETRAHEDRON LETTERS Nr. 20, 1964, Seiten 546 - 548

## Beschreibung

Die Erfindung betrifft ein Verfahren zur Herstellung von [Ir(cod)Cl]₂.

Aus dem Stand der Technik sind mehrere Verfahren zur Herstellung von [Ir(cod)Cl]₂ nach den Methoden von Herde (J. L. Herde, J. C. Lambert und C. V. Senoff: Inorganic Syntheses, 15 (1974), 18), nach Crabtree (R. H. Crabtree und G. E. Morris, J. Organomet. Chem., 135, 395 (1977)), nach Winkhaus und Singer (Gunter Winkhaus, Hellmut Singer, Chem. Ber. , 99 (1966) 3610), nach Pannetier, Bonnaire und Fougeroux (G. Pannetier, R. Bonnaire et P. Fougeroux, Journal of the less Common Metals, 21 (1970), 437 - 438) und nach Bezman, Bird, Fraser und Osborn (S.A. Bezman, P.H. Bird, A.R. Fraser, J.A. Osborn, Inorganic Chemistry, 12, 1980, 3755) bekannt.

Winkhaus und Singer erhielten [Ir(cod)Cl]₂ in 45%-iger Ausbeute durch Umsetzung von Na₂IrCl₆ x 6 H₂O bzw. H₂IrCl₆ x 6 H₂O mit cod in einem Gemisch aus Wasser und Ethanol nach 8 - 12 stündigem Erhitzen unter Rückfluss. Nach dem Waschen der ausgefallenen Kristalle mit Methanol wurde die Verbindung getrocknet und in Dichlormethan umgelöst.

Pannetier, Bonnaire und Fougeroux erhielten den Komplex in einer Ausbeute von 85 % durch Umsetzung von H₂IrCl₆ mit cod in einem Gemisch aus Wasser und Ethanol nach 12 stündigem Erhitzen unter Rückfluß (ohne nähere Angaben bezüglich der Vorgehensweise).

Bezman, Bird, Fraser und Osborn beschreiben die Synthese von [Ir(cod)Cl]₂ nach einer modifizierten Methode von Winkhaus und Singer. Iridiumtrichlorid-Hydrat, Hydrochinon, Ethanol, Wasser und Cycloocta-1,5-dien werden 4 Stunden am Rückfluss erhitzt. Anschließend wird das Lösungsmittel teilweise abdestilliert und das ausgefallene Produkt abfiltriert, gewaschen und getrocknet. Die Ausbeute beträgt lediglich 59%.

Bei dem Verfahren nach Herde wird Iridiumtrichlorid-Hydrat, Ethanol, Wasser und Cycloocta-1,5-dien 24 Stunden am Rückfluss erhitzt. Nach dem Abkühlen auf Raumtemperatur wird das ausgefallene Produkt abfiltriert, gewaschen und getrocknet. Nachteilig bei diesem Verfahren ist die geringe Ausbeute von lediglich 72%.

Bei dem Verfahren nach Crabtree wird zunächst ohne Zugabe von Wasser [IrHCl₂(cod)]₂ hergestellt und dieses anschließend mit wäßrigem Natriumacetat in den gewünschten Komplex umgewandelt, der anschließend aus Dichlormethan/Ethanol umkristallisiert wird. Die Ausbeute hierbei beträgt zwar 90 - 95 %, ist jedoch mit einer mehrstufigen und somit aufwendigen und kostenintensiven Verfahrensweise verbunden.

Pohl et al. (Inorg. Chem. 1995 1413-1429) beschreiben eine modifizierte Synthese in Ethanol mit Ausbeute von bis 68%.

Wehman Ooyevaar et al. (Inorg. Chem 1993 3347-3356) modifiziert die Synthese nach Osborn mit Hydrochinon als Reduktionsmittel (Inorg Chem 1980, 3755), ebenfalls in Ethanol/Wasser, mit 85% Ausbeute.

Baghurst et al. (J. Organomet. Chem. 368 C43-45 (1989) berichten von der mikrowellenbeschleunigten Synthese nach Herde [Inorg Synth. 15 18 (1974)] mit 72% Ausbeute.

Crabtree et al. (Synth. React. Inorg. Met.-Org. Chem. 12 407-13 (1982) beschreiben die Herstellung von [Ir(cod)Cl]₂ ausgehend von (NH₄)₂IrCl₆. Dagegen gehen vorliegend weiter unten beschriebenen Verfahren von IrCl₄, IrCl₃ oder H₂IrCl₆ aus.

Van der Ent et al. (Inorg Synth. 14 92-95 (1973**)** beschreiben eine Synthese, die von Ammoniumhexachloroiridat(III) ausgeht und in Isopropanol/Wasser durchgeführt wird. Das weiter unten beschriebene Verfahren benutzt als Ausgangsstoffe IrCl₄ x n H₂O und/oder IrCl₃ x nH₂O und/oder H₂lrCl₆.

Aus dem vorgenannten ergibt sich das Problem, mit Hilfe eines neuartigen Verfahrens die oben genannten Nachteile zumindest teilweise zu beseitigen. Das vorliegende Problem besteht insbesondere darin, ein einfaches und somit kostengünstiges Verfahren zur Herstellung von [Ir(cod)Cl]₂ bei gleichzeitig hoher Ausbeute bereitzustellen.

Dieses Problem wird erfindungsgemäß durch ein Verfahren nach Anspruch 1 gelöst.

Das erfindungsgemäße Verfahren zur Herstellung von [Ir(cod)Cl]₂ umfasst
a) Lösen von IrCl₄ x nH₂0 und/oder IrCl₃ x nH₂0 und/oder H₂IrCl₆ in Wasser;
b) Zugabe eines Alkohols und Cycloocta-1,5-dien und
c) Rühren der Lösung bei Siedetemperatur.

Es ist dadurch dadurch gekennzeichnet, dass im Schritt b) Isopropanol als Alkohol verwendet wird, wobei das Volumenverhältnis von Isopropanol, zu Wasser 2:1 bis 1:1 beträgt, im Schritt c) auf ca. 30 bis 50 % ihres ursprünglichen Volumens eingeengt wird und im Schritt c) nach Rühren der Lösung bei Siedetemperatur die Lösung zunächst auf Raumtemperatur abgekühlt wird und das entstandene [Ir(cod)Cl]₂ abfiltriert, gewaschen und getrocknet wird.

Bei dem erfindungsgemäßen Verfahren wird zunächst IrCl₄ x n H₂O und/oder IrCl₃ x nH₂0 und/oder H₂IrCl₆ in Wasser gelöst, anschließend Isopropanol, und cod (Cycloocta-1,5-dien) zugegeben und die Lösung bei Siedetemperatur gerührt.

Erfindungswesentlich bei dem vorgestellten Verfahren ist die Verwendung von Isopropanol, der überraschenderweise in Verbindung mit Wasser und cod sowohl günstige Lösungseigenschaften sowie ausgezeichnete Fällungsergebnisse bezüglich des Endproduktes zeigt.

Die übliche Verwendung von Ethanol beim Herde-Verfahren weist erheblich geringere Ausbeuten auf (72%).

Es ist erfindungsgemäß, dass das Volumenverhältnis von Isopropanol zu Wasser 2: 1 bis 1: 1 beträgt, da sich dieses Verhältnis in der Praxis sowohl bezüglich der Löslichkeitseigenschaften des Iridiumchlorids, insbesondere des IrCl₄ als auch bezüglich der ausgezeichneten Fällungseigenschaften des Endproduktes bewährt hat.

Weiterhin ist es vorteilhaft, wenn das Molverhältnis von Ir zu cod 1:8,6 beträgt, da sich dieses Verhältnis in der Praxis bewährt hat.

Nach Rühren der Lösung bei Siedetemperatur wird das entstandene [Ir(cod)Cl]₂ abfiltriert, gewaschen und getrocknet, wobei die Lösung zunächst auf Raumtemperatur abgekühlt wird. Eine solche Vorgehensweise erlaubt eine ausgezeichnete Abtrennung des entstandenen [Ir(cod)Cl]₂ von der Lösung.

Darüber hinaus ist es vorteilhaft, da bewährt, wenn der Filterkuchen (das gewünschte Endprodukt) mit Methanol, insbesondere mit kaltem Methanol, gewaschen und anschließend getrocknet wird.

Schließlich wird in vorteilhafter Art und Weise die vom Niederschlag befreite Restlösung nochmals auf ca. 30 bis 50 % ihres ursprünglichen Volumens eingeengt und der erhaltene Niederschlag wiederum abfiltriert, gewaschen und getrocknet, um somit die Gesamtausbeute zu erhöhen.

Weiterhin ist es von Vorteil, wenn das erhaltene [Ir(cod)Cl]₂ - Produkt auf eine maximale Korngröße von ca. 0,4 mm gemahlen wird, da dieses grobe Pulver gute Handhabungseigenschaften wie beispielsweise eine zufriedenstellende Abwägbarkeit aufweist.

Die nachfolgenden Beispiele dienen zur Erläuterung.

### Beispiel 1: (nicht zur Erfindung gehörig)

Vorgelegt wurden 10 g Ir in Form von IrCl₄ x n H₂O, die in 150 ml destilliertem Wasser gelöst wurden. Anschließend wurden 312 ml Isopropanol und 55 ml cod portionsweise zugesetzt und bei Siedetemperatur ca. 19 Stunden gerührt. Hierbei ergab sich ein Farbwechsel von braun bis hin zu einem intensiven Rot. Die Reaktion selbst wurde unter Inertgas (hier: Argon) durchgeführt. Beim Abkühlen auf Raumtemperatur fielen rote, glänzende [Ir(cod)Cl]₂-Kristalle aus, die anschließend abfiltriert und mit wenig kaltem Methanol gewaschen und getrocknet wurden. Die Ausbeute an Feststoff betrug 8,27 g, was ca. 47,4% entspricht.

Die Filtratlösung wurde auf ca. 30% eingeengt, wobei nochmals ein hellroter Feststoff ausfiel, der ebenfalls filtriert, gewaschen und getrocknet wurde. Hierbei konnten 7,34 g des gewünschten Produktes (42,1% Ausbeute) erhalten werden.

Somit betrug die Gesamtausbeute ca. 90%.

### Beispiel 2: (nicht zur Erfindung gehörig)

Vorgelegt wurden 10 g Ir in Form von IrCl₄ x n H₂O, die in 150 ml destilliertem Wasser gelöst wurden. Anschließend wurden 312 ml Isopropanol und 55 ml cod protionsweise zugesetzt und bei Siedetemperatur ca. 6 Stunden gerührt. Hierbei ergab sich ein Farbwechsel von braun bis hin zu einem intensiven Rot. Die Reaktion selbst wurde unter Inertgas (hier: Stickstoff) durchgeführt. Die Lösung wurde auf ca. 50% ihres ursprünglichen Volumens eingeengt. Beim Abkühlen auf Raumtemperatur fielen rote, glänzende [Ir(cod)Cl]₂-Kristalle aus, die anschließend abfiltriert und mit wenig kaltem Methanol gewaschen und getrocknet wurden. Die Ausbeute an Feststoff betrug 16,23 g (ca. 93%).

Das erhaltene Produkt wurde in einer Kugelmühle rolliert, so dass die Kristallgröße kleiner 0,4 mm betrug.

## Patentansprüche

1. Verfahren zur Herstellung von [Ir(cod)Cl]₂, mit
a) Lösen von IrCl₄ x nH₂0 und/oder IrCl₃ x nH₂0 und/oder H₂IrCl₆ in Wasser;
b) Zugabe eines Alkohols und Cycloocta-1,5-dien und
c) Rühren der Lösung bei Siedetemperatur,
**dadurch gekennzeichnet, daß** im Schritt b) Isopropanol als Alkohol verwendet wird, wobei das Volumenverhältnis von Isopropanol, zu Wasser 2 : 1 bis 1 : 1 beträgt, im Schritt c) auf ca. 30 bis 50 % ihres ursprünglichen Volumens eingeengt wird und im Schritt c) nach Rühren der Lösung bei Siedetemperatur die Lösung zunächst auf Raumtemperatur abgekühlt wird und das entstandene [Ir(cod)Cl]₂ abfiltriert, gewaschen und getrocknet wird.

2. Verfahren nach Anspruch 1, **dadurch gekennzeichnet, daß** das Molverhältnis von Ir zu COD 1:7-9 beträgt.

3. Verfahren nach Anspruch 1, **dadurch gekennzeichnet, daß** der Filterkuchen mit Methanol gewaschen und anschließend getrocknet wird.

4. Verfahren nach einem der Ansprüche 1 bis 3, **dadurch gekennzeichnet, daß** die vom Niederschlag befreite Restlösung nochmals auf ca. 30 bis 50 % ihres ursprünglichen Volumens eingeengt und der erhaltene Niederschlag wiederum abfiltriert, gewaschen und getrocknet wird.

5. Verfahren nach einem der Ansprüche 1 bis 4, **dadurch gekennzeichnet, daß** das erhaltene [Ir(cod)Cl]₂ -Produkt auf eine maximale Kristallgröße von ca. 0,4 mm gemahlen wird.

## Claims

1. Process for the preparation of [Ir(cod)Cl]₂, comprising
a) dissolution of IrCl₄ x n H₂O and/or IrCl₃ x n H₂O and/or H₂IrCl₆ in water,
b) addition of an alcohol and cycloocta-1,5-diene and
c) stirring of the solution at the boiling point,
**characterized in that** isopropanol is used in step b), the volume ratio of isopropanol to water is 2:1 to 1:1, concentration to about 30 to 50% of its original volume is effected in step c), and after stirring of the solution at the boiling point in step c), the solution is cooled down to room temperature and the [Ir(cod)Cl]₂ formed is filtered off, washed and dried.

2. Process according to Claim 1, **characterized in that** the molar ratio of Ir to COD is 1:7-9.

3. Process according to Claim 1, **characterized in that** the filter cake is washed with methanol and then dried.

4. Process according to any of Claims 1 to 3, **characterised in that** the residual solution freed from the precipitate is concentrated again to about 30 to 50% of its original volume and the precipitate obtained is once again filtered off, washed and dried.

5. Process according to any of Claims 1 to 4, **characterized in that** the [Ir(cod)Cl]₂ product obtained is milled to a maximum crystal size of about 0.4 mm.

## Revendications

1. Procédé de préparation de [Ir(cod)Cl]₂, par
a) dissolution de IrCl₄ x n H₂O et/ou IrCl₃ x n H₂O et/ou H₂IrCl₆ dans l'eau ;
b) addition d'un alcool et du cycloocta-1,5-diène et
c) agitation de la solution à la température d'ébullition
**caractérisé en ce que** dans l'étape b), l'alcohol utilisé est isopropanol, le rapport volumique de l' isopropanol à l'eau se situe dans l'intervalle allant de 2:1 à 1:1, dans l'étape c), on concentre jusqu'à environ 30 à 50% du volume initial, et dans l'étape c), après agitation de la solution à la température d'ébullition la solution est refrodiré à temperature ambiante et le [Ir (cod) Cl]₂ formé est filtré, lavé et séché.

2. Procédé selon la revendication 1, **caractérisé en ce que** le rapport molaire de Ir à COD est de 1:7-9.

3. Procédé selon la revendication 1, **caractérisé en ce que** le gâteau de filtration est lavé avec du méthanol et est ensuite, séché.

4. Procédé selon une des revendications 1 à 3, **caractérisé en ce que** la solution résiduelle libérée du dépôt est encore concentrée jusqu'à environ 30 à 50% de son volume initial et le dépôt obtenu est à nouveau filtré, lavé et séché.

5. Procédé selon une des revendications 1 à 4, **caractérisé en ce que** le produit [Ir(cod)Cl]₂ formé est broyé à une taille maximale des cristaux d'environ 0,4 mm.
